# EUROPÄISCHE PATENTSCHRIFT

(11) **EP 3 940 051 B1**
(45) Veröffentlichungstag und Bekanntmachung des Hinweises auf die Patenterteilung: **22.11.2023**
(21) Anmeldenummer: 21184985.6
(22) Anmeldetag: 12.07.2021
(51) Int. Cl.: C12H 6/02

(54) **BEHÄLTERKASKADE ZUR VERWENDUNG IN EINEM BRENNGERÄT**
CONTAINER CASCADE FOR USE IN A BURNER
CASCADE DE RÉCIPIENTS DESTINÉE À ÊTRE UTILISÉE DANS UN BRÛLEUR

(30) Priorität: 15.07.2020 DE 102020118701
(43) Veröffentlichungstag der Anmeldung: 19.01.2022
(73) Patentinhaber: Kothe, Ulrich, 73529 Schwäbisch Gmünd (DE)
(72) Erfinder: Kothe, Ulrich, 73529 Schwäbisch Gmünd (DE)
(74) Vertreter: Witte, Weller & Partner Patentanwälte mbB

(56) Entgegenhaltungen:
- EP-B1- 0 459 310
- US-B1- 7 297 236
- Brier Fyre: "How to Assemble the Distiller Model No.7", , 21. Oktober 2017 (2017-10-21), XP055867547, Gefunden im Internet: URL:https://www.youtube.com/watch?v=YjWS7I 2GWUQ [gefunden am 2021-11-30]
- Anonymous: "File:Brennerei beschriftet.jpg - Wikimedia Commons", , 5. November 2006 (2006-11-05), Seiten 1-4, XP055867802, Gefunden im Internet: URL:https://commons.wikimedia.org/wiki/Fil e:Brennerei_beschriftet.jpg [gefunden am 2021-12-01]

## Beschreibung

Die vorliegende Offenbarung bezieht sich auf eine Behälterkaskade zur Verwendung in einem Brenngerät sowie ein Brenngerät mit einer Behälterkaskade. Ferner bezieht sich die vorliegende Offenbarung auf ein Verfahren zur Bereitstellung eines Brenngerätes.

Brenngeräte sind Vorrichtungen zur Herstellung alkoholhaltiger Getränke und können auch als Destillationsanlagen bezeichnet werden. Allgemein dient eine Brennerei der Herstellung von Spirituosen mit hohem Alkoholgehalt aus Ausgangsstoffen mit niedrigerem Alkoholgehalt. Auf diese Weise lassen sich beispielsweise Branntwein, Obstbrände, Getreidebrände und weitere Spirituosen herstellen.
Aus der US 7 297 236 B1 ist eine Anordnung zur Destillation von Alkohol bekannt, die eine Mehrzahl übereinander angeordneter Behälter gleicher Gestalt und Größe aufweist, wobei die Behälter vertikal von einem alkoholhaltigen Fluid durchströmt werden, und wobei die Behälter einen oberen Abschnitt, der einen Wärmetauscher beherbergt, und einen unteren Abschnitt aufweisen, der einen größeren Durchmesser als der obere Abschnitt aufweist. Der Wärmetauscher wird von Wasser bzw. Wasserdampf durchströmt.
Aus der EP 0 459 310 B1 ist ein Destillationsgerät für Obstbrände und dergleichen bekannt, das eine zylindrisch gestaltete Verstärkerkolonne mit mehreren Verstärkerböden aufweist, wobei über den Verstärkerböden ein Dephlegmator und zumindest ein Katalysator zur Reduzierung des Cyanidgehaltes und damit zur Verminderung der Bildung von Ethylcarbamat vorgesehen sind.
Das Internet-Dokument Brier Fyre: "How to Assemble the Distiller Model No.7", 21. Oktober 2017, XP055867547 (https://www.youtube.com/watch?v=YjWS7l2GWUQ) zeigt ein Brenngerät für den Hausgebrauch mit einer einzelnen, spindelförmig gestalteten Verstärkereinheit. Das Internet-Dokument "File:Brennerei beschriftet.jpg - Wikimedia Commons", 5. November 2006, Seiten 1-4, XP055867802 (https://commons.wikimedia.org/wiki/File:Brennerei_beschriftet.jpg) beschreibt allgemein den Aufbau eines Brenngeräts.

Aus der DE 10 2007 054 705 A1 ist ein Brenngerät zur Herstellung von Obstbrand oder Branntwein durch Erhitzung von Maischen, Weinen, Mosten und/oder Trestern bekannt, umfassend eine Erzeugereinheit mit Blase und Helm, und zumindest eine außerhalb der Erzeugereinheit angeordnete weitere Einheit zur Behandlung des erzeugten Geistdampfes, etwa eine Kühlereinheit oder eine Verstärkereinheit. Ferner sind ein Geistrohr zur strömungstechnischen Verbindung der Erzeugereinheit mit der weiteren Einheit und eine Vorlage zum Sammeln des erzeugten Destillates vorgesehen. Das Geistrohr verläuft weitgehend innerhalb der Erzeugereinheit, also innerhalb von Blase und Helm.

Aus der DE 196 08 547 A1 sind ein Verfahren zur Destillation und eine weitere beispielhafte Gestaltung eines Brenngerätes bekannt. Aus der DE 198 43 503 A1 ist eine weitere beispielhafte Gestaltung eines Brenngerätes bekannt. Brenngeräte sind regelmäßig an geplante Ausbringmengen angepasst. Ferner können sich die Brenngeräte hinsichtlich des gewählten Automatisierungsgrades unterscheiden. Auch hinsichtlich der zu produzierenden Spirituosen kann es gestalterische Anpassungen bei Brenngeräten geben.

Aus der DE 91 13 932 U1 ist ein kastenförmiger Flüssigkeitstank für durch Kühlen oder Erwärmen zu temperierende Flüssigkeiten bekannt, der in seinem Innenraum eine Mehrzahl flacher, plattenförmiger Behälter aufweist, die die zu temperierende Flüssigkeit beherbergen. Aus der DE 10 2010 048 935 A1 ist eine Vorrichtung zur Innenreinigung von Tankbehältern für Chemikalien bekannt, die eine sogenannte Kondensatbox zur Kondensation von gemischten aus Wasser und Chemikalien nutzt.

Brenngeräte umfassen üblicherweise eine Brennblase mit Helm. Die Brennblase lässt sich über eine Heizeinrichtung direkt oder indirekt beheizten. Zur Erhöhung des Alkoholgehalts ist häufig ein Verstärker vorgesehen, der etwa als Verstärkerkolonne gestaltet ist. Eine Verstärkerkolonne umfasst beispielsweise einen oder mehrere sogenannte Kochböden. Ferner kann ein sogenannter Dephlegmator vorgesehen sein. Vorteil eines Verstärkers bzw. einer Verstärkerkolonne ist, dass auf mehrmaliges Brennen der Maische verzichtet werden kann. Der gewünschte Alkoholgehalt wird in nur einem Durchgang erreicht. Dies ist nicht einschränkend zu verstehen. Es sind auch Anwendungen vorstellbar, bei denen ein mehrmaliges Brennen gewünscht ist.

Rund um das Brennereiwesen hat sich in der jüngeren Vergangenheit eine Event-Kultur entwickelt, bei der auch die Präsentation der Anlagen von hoher Bedeutung ist. Dies trifft beispielsweise auf Schaubrennereien, Restaurants und andere Lokalitäten mit angeschlossener Brennerei zu. Die ästhetische Gestaltung des Brenngerätes gewinnt weiter an Bedeutung.

Ferner besteht ein Bedarf nach weiterführenden Möglichkeiten der Einflussnahme auf den Brennprozess. Dies betrifft beispielsweise eine feinfühlige Steuerung von Fluidmengen, der Temperatur, des Kühlverhaltens und dergleichen. Ein Ziel ist häufig die geschmackliche Verbesserung und die weitere geschmackliche Differenzierung.

Daneben besteht grundsätzlich ein Bedarf an ressourcenschonenden Maßnahmen, auch im Brennereiwesen. Dies betrifft beispielsweise den Energiebedarf und den Wasserverbrauch.

Vor diesem Hintergrund liegt der vorliegenden Offenbarung die Aufgabe zugrunde, Maßnahmen und geeignete Baugruppen zur weiteren Optimierung von Brenngeräten bereitzustellen. Vorzugsweise eignen sich die Baugruppen zur Erzeugung hochwertiger Spirituosen, wobei vielfältige Möglichkeiten zur Beeinflussung und Steuerung des Brennvorgangs bereitgestellt werden. Vorzugsweise tragen die Maßnahmen zu einem verringerten Ressourcenverbrauch bei. Ferner soll eine optisch ansprechende Gestaltung möglich sein. Vorzugsweise kann das Brenngerät als Eyecatcher (Blickfang) in einer entsprechenden Lokalität dienen. Ferner sollen die Baugruppe und ein damit versehenes Brenngerät unter Nutzung etablierter Fertigungstechnologien im Brennereiwesen hergestellt werden können.

Gemäß einem ersten Aspekt bezieht sich die vorliegende Offenbarung auf eine Behälterkaskade zur Verwendung in einem Brenngerät für Spirituosen, umfassend zumindest zwei übereinander angeordnete Behälter, die zum Medientransfer miteinander verbunden sind, wobei jeder Behälter einen oberen Anschluss und einen unteren Anschluss aufweist, wobei die Behälter zum Transfer alkoholhaltigen Fluides zwischen Innenräumen der Behälter über Rohrstücke miteinander verbunden und voneinander beabstandet sind, und wobei die zumindest zwei Behälter in den Innenräumen zumindest einen Kanal zur Durchleitung eines Prozessfluides aufweisen, wobei die zumindest zwei Behälter als Ellipsoid, insbesondere als Rotationsellipsoid, gestaltet sind, wobei die zumindest zwei Ellipsoide vorzugsweise mit ihrer kurzen Hauptachse vertikal ausgerichtet und übereinander angeordnet sind, und wobei die Behälterkaskade zumindest einen Strang mit drei oder mehr übereinander angeordneten Behältern und/oder zwei parallel zueinander orientierte Stränge mit jeweils zumindest zwei Behältern umfasst.

Die Aufgabe der Offenbarung wird auf diese Weise vollkommen gelöst.

Beispielhaft weisen die Behälter einen ellipsenförmigen/linsenförmigen Querschnitt auf. Die Behälter können je nach Einsatzzweck zur Erwärmung und/oder zur Kühlung des durchgeleiteten alkoholhaltigen Fluides dienen. Demgemäß können die Behälter einer Verstärkerbaugruppe, aber auch einer Kühlbaugruppe zugeordnet sein. Das alkoholhaltige Fluid liegt beispielsweise als Alkoholdampf bzw. alkoholhaltiger Dampf vor.

Bei dem Prozessfluid handelt es sich beispielsweise um Kühlwasser, Wasserdampf, Heißdampf, Warmwasser oder dergleichen.

Im Inneren der Behälter ist zumindest ein Kanal für ein Prozessfluid vorgesehen. Auf diese Weise kann beispielsweise Kühlwasser den Behälter durchströmen. Demgemäß kann ein Wärmeaustausch stattfinden. In ähnlicher Weise kann jedoch auch ein erwärmtes oder heißes Prozessfluid den Kühlkanal durchströmen.

Beispielhaft ist der zumindest eine Kanal als Thermotasche mit einem oder mehreren Rohren ausgestaltet. Auf diese Weise wird ein Kühlbereich bereitgestellt, in dem Alkoholdämpfe bzw. deren wasserhaltige Bestandteile kondensieren können. Auf diese Weise kann in beispielhaften Ausgestaltungen der Dephlegmator eines Brenngerätes ersetzt oder ergänzt werden.

Ferner ist es vorstellbar, die Verstärkerkolonne durch eine Verstärkereinheit ersetzt werden, die durch zwei oder mehr übereinander angeordnete Behälter mit entsprechenden Kühlbereichen gebildet wird, zumindest in beispielhaften Ausgestaltungen. Ein Vorteil besteht darin, dass jeder Behälter einzelnen gekühlt und angesteuert werden kann.

Diese Gestaltung erlaubt eine gezielte Beeinflussung der Destillation. Es kann eine schonendere Destillation erreicht werden, die zu einer Qualitätsverbesserung beim Destillat führt. Das Aroma des Destillats lässt sich auf diese Weise verbessern.

Wie vorstehend bereits angedeutet, ist es vorstellbar, alternativ oder zusätzlich zu den Kühlbereichen zumindest einen Kanal im Behälter als Heizkanal zu nutzen. Auf diese Weise können in der Destillationsbaugruppe eine oder mehrere Heizzonen geschaffen werden. Folglich können einzelne oder mehrere der Behälter auch als Kochboden verwendet werden.

Einzelbehälter mit innenliegender Kühlung bei der Destillationsbaugruppe erlauben eine weitere Optimierung der Destillation. Die Schaffung weiterer feingliedriger Möglichkeiten zur lokalen Einflussnahme auf den Brennvorgang wird zumindest in beispielhaften Ausgestaltungen als Vorteil betrachtet.

Ferner ergibt sich zumindest in beispielhaften Ausgestaltungen als weiterer Vorteil ein verringerter Wasserverbrauch. Schließlich lassen sich auch Energieeinsparungen erzielen, zumindest in beispielhaften Ausgestaltungen. Dies kann jeweils damit begründet werden, dass größere Baugruppen in einzelne Volumina (Behälter) aufgeteilt werden, auf die gezielt Einfluss genommen werden kann. Somit lassen sich die Behälter effizienter Kühlen oder bedarfsweise Erhitzen.

Die zumindest zwei Behälter sind als Ellipsoid, insbesondere Rotationsellipsoid, gestaltet. Mit anderen Worten sind die zumindest zwei Behälter ballonartig oder blasenartig gestaltet. Eine weitere Analogie ist etwa die Form einer Linse. Beispielhaft sind die zumindest zwei Behälter hinsichtlich einer Hauptebene symmetrisch oder im Wesentlichen symmetrisch gestaltet. Auf diese Weise vereinfacht sich die Fertigung, da zwei Halbschalen gleichen Typs miteinander gefügt werden können. Platt gesagt handelt es sich bei einem Rotationsellipsoid näherungsweise um eine gestauchte Kugel.

Die Gestaltung als Ellipsoid oder in ähnlicher Weise vereinfacht ferner die Reinigung, da sich auf diese Weise Kanten, Spitzen und Ähnliches beim Behälterkörper minimieren lassen. Der oder die Behälter können grundsätzlich auch kugelförmig gestaltet sein, zumindest in alternativen Ausgestaltungen.

Die zumindest zwei Ellipsoide sind mit ihrer kurzen Hauptachse vertikal ausgerichtet und übereinander angeordnet. Auf diese Weise lässt sich eine Kaskade oder ein Stapel (zum Beispiel pyramidenähnlich) der Ellipsoide verwirklichen.

Gemäß einer weiteren beispielhaften Ausgestaltung sind die Rohrstücke statisch tragend. Mit anderen Worten können die zumindest zwei Behälter ohne weitere Träger oder Stützen übereinander angeordnet werden. Es ergibt sich eine hochwertige Gestaltung. Dies ist gleichwohl nicht einschränkend zu verstehen. Mit anderen Worten können die Behälter übereinander angeordnet sein, wobei die Rohrstücke den Abstand zwischen zwei Behältern definieren. Es ist auch vorstellbar, übereinander angeordnete Behälter über separate Stützen zu tragen und zu halten.

Gemäß einer weiteren Ausgestaltung umfasst die Behälterkaskade zumindest einen Strang mit drei oder mehr übereinander angeordneten Behältern. Auf diese Weise lassen sich drei oder mehr Prozessbereiche für das alkoholhaltige Fluid bereitstellen, die gegebenenfalls einzeln überwacht und angesteuert werden können. Es versteht sich, dass die Behälterkaskade beispielhaft auch vier, fünf, sechs oder mehr Behälter aufweisen kann.

Gemäß einer weiteren Ausgestaltung umfasst die Behälterkaskade zwei parallel zueinander orientierte Stränge mit jeweils zumindest zwei Behältern. Insbesondere können die zwei Stränge gleichartige Behälter umfassen. Auf diese Weise können die Stränge mit einer überschaubaren Anzahl unterschiedlicher Behälter (insbesondere Behälterschalen) aufgebaut werden.

Gemäß einer weiteren beispielhaften Ausgestaltung sind die Kanäle in den Innenräumen der Behälter als Kühlkanäle gestaltet. Beispielhaft bilden die Kanäle eine Thermotasche aus. Eine Thermotasche kann grundsätzlich als Kühltasche oder Wärmetasche gestaltet sein. Es ist auch vorstellbar, ein und dieselbe Thermotasche je nach konkreter Anwendung als Kühltasche und/oder Wärmetasche zu verwenden. Üblicherweise umfasst eine Thermotasche ein bestimmtes Volumen, das im Innenraum der Behälter angeordnet aber vom Behälterinnenraum durch eine Wandung beabstandet ist. Ferner umfasst eine Thermotasche üblicherweise zumindest einen Anschluss, regelmäßig zwei Anschlüsse, über die das Prozessfluid eingeleitet und abgeleitet werden kann. Den Anschlüssen können Ventile zur bedarfsweisen Freigabe oder Sperre zugeordnet sein.

Eine Thermotasche kann durch einen gewundenen Rohrkörper gebildet sein. Es ist jedoch auch vorstellbar, die Thermotasche wannenähnlich, tellerähnlich oder ähnlich einem Diskus zu gestalten, ohne Verwendung eines (beispielsweise gewundenen) Rohrkörpers. Mischformen sind denkbar.

Die Thermotasche dient üblicherweise zum Wärmeaustausch mit dem (übrigen) Innenraum des Behälters. Auf diese Weise kann ein Fluid im Behälter bedarfsweise gekühlt oder erwärmt werden. Eine Thermotasche dient beispielsweise zum Thermomanagement/Temperaturmanagement im Innenraum des Behälters, um dort das Fluid gezielt zu kühlen und/oder zu erwärmen.

In einer beispielhaften Ausgestaltung ist die Thermotasche an den Behälter angepasst, insbesondere an dessen äußere Gestaltung. In einer beispielhaften Ausgestaltung ist die Thermotasche zumindest an ihrer behälternahen Seite gekrümmt und an die Krümmung des Behälters, insbesondere des ellipsenförmigen Behälters, angepasst. Mit anderen Worten ist die Thermotasche beispielhaft in Richtung auf die Behälterwand mit einer Krümmung versehen, die an die Krümmung der Behälterwand angepasst ist. Auf diese Weise lässt sich bedarfsweise ein zumindest hinreichend konstanter Spalt zwischen Behälterwand und Thermotasche erzeugen.

Gemäß einer weiteren beispielhaften Ausgestaltung ist zumindest ein Behälter Bestandteil einer Verstärkereinheit, wobei in der Verstärkereinheit der Alkoholgehalt des durchströmenden Fluides durch gezielte Kondensation unter Nutzung eines Kanals als Kühlkanal erhöht wird. Mit anderen Worten kann die Behälterkaskade etwa eine Verstärkerkolonne vollständig oder teilweise ersetzen.

Eine Verstärkerkolonne üblicher Bauart weist regelmäßig mehrere Böden und einen Dephlegmator am oberen Ende auf. Die Funktion der einzelnen Böden bzw. die Funktion des Dephlegmators kann teilweise oder vollständig von einzelnen Behältern der Behälterkaskade übernommen werden.

Gemäß einer weiteren beispielhaften Ausgestaltung umfassen die Kanäle in den Innenräumen der Behälter obere Kanäle, insbesondere eine obere Tasche, und untere Kanäle, insbesondere eine untere Tasche. Mit anderen Worten können eine obere Thermotasche und eine untere Thermotasche im Innenraum des Behälters angeordnet sein. Auf diese Weise erhöht sich der Funktionsumfang eines Behälters. In einer beispielhaften Ausgestaltung können sowohl die obere Thermotasche als auch die untere Thermotasche separat versorgt und angesteuert werden.

Gemäß einer weiteren beispielhaften Ausgestaltung sind die oberen Kanäle als Kühlkanäle gestaltet, wobei die unteren Kanäle als Heißkanäle gestaltet sind. Auf diese Weise kann ein und derselbe Behälter bedarfsweise zur Kühlung oder zur Erhitzung verwendet werden.

Gemäß einer weiteren beispielhaften Ausgestaltung ist zumindest einer der Behälter als Kochboden ausgebildet. Auf diese Weise kann der Behälter einen Kochboden einer Verstärkerkolonne ersetzen. Demgemäß kann der Behälter einen Bestandteil einer Verstärkereinheit bilden. Bei einem Kochboden wie allgemein bei der Destillation wird der Umstand genutzt, dass bei steigender Temperatur Ethanol eher verdampft als wasserhaltige Bestandteile. Ein Kochboden ist beispielhaft als Glockenboden gestaltet und umfasst eine Glocke/Haube, die einen am unteren Ende des Behälters in dessen Innenraum ragenden Stutzen abdeckt.

Gemäß einer weiteren beispielhaften Ausgestaltung ist zumindest ein Behälter Bestandteil einer Verstärkereinheit, wobei der Alkoholgehalt des durchströmenden Fluides durch gezielte Kondensation unter Nutzung eines Kanals als Kühlkanal erhöht wird. Bei dieser Gestaltung wird darauf gesetzt, dass etwa wasserhaltige Bestandteile eher kondensieren als Ethanol, wenn die Temperatur sinkt. Mit anderen Worten kann zumindest einer der Behälter als Dephlegmator-Ersatz verwendet werden, der ein ähnliches Wirkprinzip nutzt.

Je nach Anzahl der Behälter in der Behälterkaskade ist es vorstellbar, einen oder mehrere Behälter als Kochboden und einen oder mehrere Behälter als Dephlegmator zu nutzen. Beispielhaft befinden sich in der Behälterkaskade fünf übereinander angeordnete Behälter, von denen die drei unteren jeweils als Kochboden und die beiden oberen als Dephlegmator gestaltet sind. Dies ist nicht einschränkend zu verstehen.

Gemäß einer beispielhaften Ausgestaltung ist zumindest einer der Behälter als Kühler gestaltet. Es versteht sich, dass zwei oder mehr der Behälter eine Kühlerkaskade bilden können. Auf diese Weise kann das gewonnene alkoholhaltige Fluid verflüssigt und auf die gewünschte Entnahmetemperatur herabgekühlt werden.

Gemäß einer weiteren beispielhaften Ausgestaltung sind die zumindest zwei übereinander angeordneten Behälter von unten nach oben kleiner werdend gestaltet. Beispielsweise verringert sich auf diese Weise das wirksame Volumen der Behälter, von unten nach oben betrachtet. Mit anderen Worten trägt ein jeweils größerer Behälter einen kleineren. Auf diese Weise ergibt sich ein pyramidenähnlicher Aufbau. Mit anderen Worten verjüngen sich die Behälter in der Kaskade von unten nach oben. Diese Gestaltung und die damit einhergehende Volumenänderung lassen sich gut zur Beeinflussung des Brennprozesses nutzen.

Wenn im Rahmen dieser Offenbarung von einem größeren oder kleineren Behälter die Rede ist, so bezieht sich dies beispielhaft auf das Volumen, beispielhaft auch auf die Querschnittsgestaltung. Die Größenabstufung kann etwa eine jeweilige Hauptachse des Ellipsoids oder einen Umfang in einer horizontal ausgerichteten Mittelebene betreffen. Die Behälter können sich - zumindest hinsichtlich ihrer Größe und ihrer äußeren Gestalt - geometrisch ähnlich sein. Auf diese Weise lässt sich eine optisch ansprechende Gestaltung erzielen.

Es versteht sich jedoch, dass eine Behälterkaskade grundsätzlich auch einen oder mehrere Behälter mit gleichen Abmessungen und Volumina aufweisen kann. Es ist auch vorstellbar, eine Behälterkaskade aus Behältern zu bilden, deren Größe oder Volumen sich von oben nach unten verringert. Es ist eine große Gestaltungsfreiheit gegeben.

Gemäß einer weiteren beispielhaften Ausgestaltung besteht zumindest einer der Behälter aus zwei Halbschalen, die miteinander beispielsweise stoffschlüssig verbunden sind. Dies hat den Vorteil, dass nur eine Form/Vorrichtung zur Herstellung einer Halbschale notwendig ist. Die Halbschalen bestehen beispielsweise aus Kupfer oder einem kupferhaltigen Werkstoff. Auch Edelstahl ist denkbar, insbesondere bei der Verwendung als Kühler.

Auf diese Weise können existierende Formen für Helme, Kochböden und dergleichen verwendet werden. Mit anderen Worten lassen sich die Behälter aus zwei Halbschalen fertigen, die jeweils in Alleinstellung einen Abschnitt eines Helms oder einer Blase ausbilden können.

In einer beispielhaften Ausgestaltung wird auf Formen und Vorrichtungen zurückgegriffen, die zur Herstellung von Halbzeugen für Brennblasen oder Helmen für Brennblasen genutzt werden. Auf diese Weise lassen sich die Behälter ohne großen Zusatzaufwand mit hoher Qualität herstellen.

Gemäß einer weiteren beispielhaften Ausgestaltung werden zumindest zwei übereinander angeordnete Behälter von unten nach oben durchströmt, wobei es sich insbesondere um Kochböden zur Verstärkung handelt.

Gemäß einer weiteren beispielhaften Ausgestaltung werden zumindest zwei übereinander angeordnete Behälter von oben nach unten durchströmt, wobei es sich insbesondere um Kühlböden handelt. Mit anderen Worten kann der fallende Alkoholdampf gekühlt werden.

Ein weiterer Vorteil, der sich zumindest in beispielhaften Ausgestaltungen aus der Gestaltung als Behälterkaskade ergibt, ist die Möglichkeit, jeden der Behälter separat mit Schaugläsern, Temperaturfühlern, Ventilen, Anschlüssen und dergleichen zu versehen. Auf diese Weise kann gezielt auf den Brennvorgang Einfluss genommen werden.

Während des Brennvorgangs können nun die verschiedenen Fraktionen des Destillats gezielt und variabel voneinander getrennt werden. Auf diese Weise ergeben sich weitere Einflussmöglichkeiten auf den Brennvorgang. Beispielsweise kann gezielt mittels Kühlung oder Erhitzung auf das Destillat bzw. den Alkoholdampf eingewirkt werden. Parameter des Brennvorgangs lassen sich einzeln pro Behälter einstellen.

Gemäß einem weiteren Aspekt bezieht sich die vorliegende Offenbarung auf ein Brenngerät mit einer Brennblase, die mit einer Heizeinrichtung gekoppelt ist, und mit zumindest einer Behälterkaskade nach einer der hierin beschriebenen Ausführungsformen, wobei die zumindest eine Behälterkaskade als Verstärkereinheit oder Kühlereinheit dient und beim Brennvorgang von einem alkoholhaltigen Fluid vertikal durchströmt wird.

Gemäß einer weiteren Ausgestaltung des Brenngerätes sind zwei Behälterkaskaden vorgesehen, wobei eine Behälterkaskade vom alkoholhaltigen Fluid entgegen der Schwerkraft und eine andere Behälterkaskade vom alkoholhaltigen Fluid in Schwerkraftrichtung durchströmt wird. Demgemäß kann eine Behälterkaskade als Verstärkereinheit und eine andere Behälterkaskade als Kühlereinheit dienen.

Ein weiterer Vorteil ergibt sich zumindest in beispielhaften Gestaltungen dadurch, dass die begrenzten und voneinander separierten Volumina die Aufwärmzeit des Brenngerätes (das Vorheizen) reduzieren. Dies kann zu Energieeinsparungen und folglich Kosteneinsparungen führen.

Dadurch, dass gezielt auf die einzelnen Behälter eingewirkt werden kann, kann ebenso der Verbrauch des Prozessfluides (üblicherweise Wasser) reduziert werden.

Ein weiterer Vorteil ist, dass bedarfsweise auch ohne einen Dephlegmator ein hoher Alkoholgehalt erreichbar ist, zumindest in beispielhaften Ausgestaltungen. In einem Dephlegmator wird der Alkoholgehalt eines Fluides dadurch erhöht, dass schwerer siedende Bestandteile kondensiert werden. Ähnliches lässt sich mit den Behältern bewerkstelligen.

In einer beispielhaften Ausgestaltung kann mit nur einem Brennvorgang der gewünschte Alkoholgehalt erzielt werden. Mehrmaliges Brennen zur weiteren Erhöhung des Alkoholgehalts ist nicht notwendig. Damit verringert sich insgesamt die Brenndauer, die Ausbringmenge steigt. Der Ressourcenverbrauch sinkt.

Gemäß einer weiteren beispielhaften Ausgestaltung des Brenngerätes dient eine Behälterkaskade als Verstärkereinheit, wobei diese Behälterkaskade auf einem Helm der Brennblase benachbart zu dieser angeordnet ist.

Wenn der Helm beispielsweise als birnenförmiger Geisthelm gestaltet ist, kann die Gestaltung der Behälter der Behälterkaskade die rundliche/bauchige Gestaltung des Geisthelms aufgreifen und fortführen.

Gemäß einer weiteren beispielhaften Ausgestaltung des Brenngerätes ist die Brennblase zwischen einer ersten Behälterkaskade, die als Verstärkereinheit dient, und einer zweiten Behälterkaskade, die als Kühlereinheit dient, angeordnet, wobei die Verstärkereinheit vorzugsweise an ihrem unteren Behälter über ein Geistrohr gespeist wird, das zumindest teilweise durch die Brennblase verläuft, und wobei zwischen der Verstärkereinheit und der Kühlereinheit eine Verbindungsleitung angeordnet ist, die ein Wegeventil aufweist. Über das Wegeventil kann die Brennblase bedarfsweise unter Umgehung der Verstärkereinheit mit der Kühlereinheit gekoppelt werden, zumindest in einer beispielhaften Ausführungsform.

Gemäß einem weiteren Aspekt bezieht sich die vorliegende Offenbarung auf einen als Ellipsoid, insbesondere als Rotationsellipsoid, gestalteten Behälter zur Verwendung bei einem Brenngerät, wobei der Behälter einen unteren Anschluss und einen oberen Anschluss aufweist, wobei der Behälter zum Transfer alkoholhaltigen Fluides durch einen Innenraum des Behälters ausgebildet ist, und wobei der Behälter im Innenraum zumindest einen Kanal zur Durchleitung eines Prozessfluides aufweist. Beispielhaft ist der zumindest eine Kanal als Thermotasche gestaltet. Beispielhaft durchläuft der zumindest eine Kanal eine Thermotasche im Innenraum des Behälters.

Beispielsweise schmiegt sich die Thermotasche an eine Behälterwand, insbesondere benachbart zum oberen Anschluss. Beispielhaft weist die Thermotasche einen gewölbten Querschnitt auf, der an eine Krümmung der Behälterwand angepasst ist. Die Thermotasche kann mit geringem Abstand zur Behälterwand angeordnet sein, so dass das alkoholhaltige Fluid den auf diese Weise gebildeten Zwischenraum durchströmen muss. Die Thermotasche wird beispielsweise durch zwei gekrümmte Halbschalen gebildet. Die Thermotasche weist beispielhaft einen Einlass und einen Auslass zur Durchleitung des Prozessfluides auf. Auf diese Weise lassen sich vielfältige Möglichkeiten zur Kühlung oder Erwärmung des alkoholhaltigen Fluides schaffen.

Mehrere solcher Behälter können zu einer Behälterkaskade kombiniert werden. Es ist jedoch auch vorstellbar, einen solchen Behälter in Alleinstellung in ein Brenngerät zu integrieren. Dies kann als Bestandteil einer Verstärkereinheit und/oder als Bestandteil einer Kühlereinheit erfolgen.

Gemäß einem weiteren Aspekt bezieht sich die vorliegende Offenbarung auf ein Verfahren zur Bereitstellung eines Brenngerätes, umfassend die folgenden Schritte:
- Bereitstellung einer Brennblase, die mit einer Heizeinrichtung gekoppelt ist,
- Bereitstellung einer Mehrzahl von Behältern, die zu einer Behälterkaskade gemäß zumindest einer der hierin beschriebenen Ausführungsformen kombinierbar sind,
- Anordnen der Behälter in zumindest einem Strang, übereinander und vorzugsweise nach Größe geordnet, zur Ausbildung der Behälterkaskade,
- Verbindung der Behälterkaskade mit einem Geistrohr der Brennblase, und
- Verbindung von Kanälen im Inneren der Behälter mit Anschlüssen zur Durchleitung eines Prozessfluides.

Auch auf diese Weise wird die Aufgabe der Offenbarung gelöst.

Die Verbindung mit dem Geistrohr kann mittelbar oder unmittelbar erfolgen. Ein existierendes Brenngerät kann in einfacher Weise ertüchtigt werden. Beispielsweise kann eine Behälterkaskade eine Verstärkerkolonne zumindest teilweise ersetzen. In ähnlicher Weise kann eine Behälterkaskade einen Kühler zumindest teilweise ersetzen. Es versteht sich, dass bei geeigneter Gestaltung die Behälterkaskade eine konventionelle Verstärkerkolonne und/oder einen konventionellen Kühler vollständig ersetzen kann.

Mit anderen Worten kann eine Art Baukasten vorgehalten werden, der eine Mehrzahl von Behältern unterschiedlicher Größe aufweist. Die Größe der Behälter kann abgestuft sein, so dass aus einer Mehrzahl von Behältern eine Behälterkaskade aufgebaut werden kann. Damit lassen sich beispielsweise die Kühlereinheit und/oder die Verstärkereinheit modularisieren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Offenbarung ergeben sich aus der nachfolgenden Beschreibung und Erläuterung mehrerer beispielhafter Ausführungsformen unter Bezugnahme auf die Zeichnungen. Es zeigen:
- Fig. 1: eine schematisch vereinfachte Darstellung einer Ausführungsform eines bekannten Brenngerätes;
- Fig. 2: eine schematische Ansicht einer Ausführungsform einer Behälterkaskade aus drei Behältern;
- Fig. 3: eine vergrößerte Darstellung einer Ausführungsform eines Behälters zur Verwendung in einer Behälterkaskade;
- Fig. 4: eine vergrößerte Darstellung einer weiteren Ausführungsform eines Behälters zur Verwendung in einer Behälterkaskade;
- Fig. 5: eine schematische Darstellung einer Ausführungsform eines Brenngerätes, das zwei Behälterkaskaden verwendet;
- Fig. 6: eine schematische Darstellung einer weiteren Ausführungsform eines Brenngerätes, das zwei Behälterkaskaden verwendet; und
- Fig. 7: ein Blockschaltbild zur Veranschaulichung einer Ausführungsform eines Verfahrens zur Bereitstellung eines Brenngerätes mit einer Behälterkaskade.

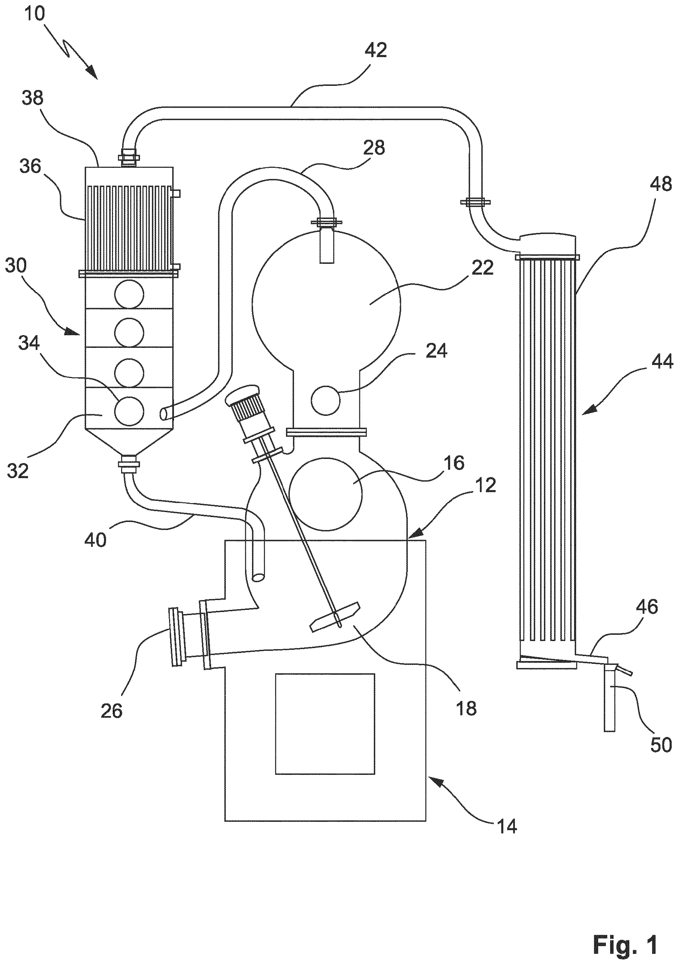

Fig. 1 zeigt eine Ausführungsform eines konventionellen Brenngerätes, das insgesamt mit 10 bezeichnet ist. Die Darstellung gemäß Fig. 1 dient vorrangig zur Beschreibung grundsätzlicher Funktionen und Baugruppen eines Brenngerätes. Daher beziehen sich die nachfolgenden Ausführungen zu offenbarungsgemäße Ausgestaltungen zumindest teilweise auch auf die Darstellung und Beschreibung des Brenngerätes 10.

Das Brenngerät 10 weist eine Brennblase 12 auf, die über eine Heizeinrichtung 14 beheizbar ist. Üblicherweise dient die Heizeinrichtung 14 auch als Gestell oder Bett für die Brennblase 12. Die Brennblase 12 dient zur Aufnahme von Maische, die durch eine Befüllöffnung in die Brennblase 12 eingebracht werden kann. Die Heizeinrichtung 14 ist zur direkten oder indirekten Erwärmung der Brennblase 12 und folglich von darin aufgenommener Maische ausgebildet.

Beispielhaft weist das Brenngerät 10 ferner ein Rührwerk 18 zum Rühren und Durchmischen der Maische in der Brennblase 12 auf. Fig. 1 verzichtet aus Gründen der Übersichtlichkeit auf die Darstellung der Steuerung des Brenngerätes 10, ferner auf die Darstellung bestimmter Sensoren, Aktoren, Ventile, Kanäle für Kühlwasser, Heißwasser und dergleichen. Dies ist jedoch nicht einschränkend zu verstehen.

Ein Helm 22 krönt die Brennblase 12. Im Helm 22 sammelt sich beim Brennvorgang ein alkoholhaltiges Fluid in Form eines alkoholhaltigen Dampfes. Über ein Geistrohr 28 gelangt das alkoholhaltige Fluid in eine Verstärkerkolonne 30, welche im Ausführungsbeispiel gemäß Fig. 1 mehrere übereinander angeordnete Ebenen oder Verstärkerböden 32 aufweist. Die Verstärkerkolonne 30 kann auch als Aromator bezeichnet werden. Den Verstärkerböden 32 sind Schaugläsern 34 zugeordnet. Die Verstärkerböden 32 sind beispielsweise als sogenannte Kochböden oder Glockenböden gestaltet. Ziel ist die Anreicherung des Alkoholgehalts im alkoholhaltigen Fluid. Ferner beeinflussen die Gestaltung und der Betrieb der Verstärkerkolonne 30 den Geschmack des Destillats.

Die Verstärkerkolonne 30 umfasst ferner einen sogenannten Dephlegmator 36, der das alkoholhaltige Fluid bewusst abkühlt, so dass sich wasserhaltige Bestandteile aufgrund der höheren Siedetemperatur beim Abkühlen eher verflüssigen, wodurch der Alkoholanteil steigt. Die Verstärkerkolonne 30 weist ein Gehäuse 38 in Zylinderform auf. Ferner ist ein sogenannter Lutterrücklauf 40 vorgesehen, über den ein sogenannter Rohbrand oder Raubrand aus der Verstärkerkolonne 30 in die Pfanne 12 zurückgeführt werden kann.

Der angereicherte alkoholhaltige Dampf wird sodann über eine Verbindungsleitung 42 in einen Kühler 44 geleitet. Der Kühler 44 ist beispielhaft als Rohrkühler gestaltet. Andere Gestaltungen sind grundsätzlich denkbar. Im Kühler 44 kondensiert das alkoholhaltige Fluid. Der Kühler 44 weist einen Destillatablauf 46 zur Abgabe des verflüssigten Destillats, das sich in einer Vorlage 50 sammelt. Ähnlich wie die Verstärkerkolonne 30 weist auch der Kühler 44 ein etwa zylindrisches Gehäuse 48 auf. Damit ist die Gestaltungsfreiheit betreffend die Verstärkerkolonne 30 sowie den Kühler 44 limitiert.

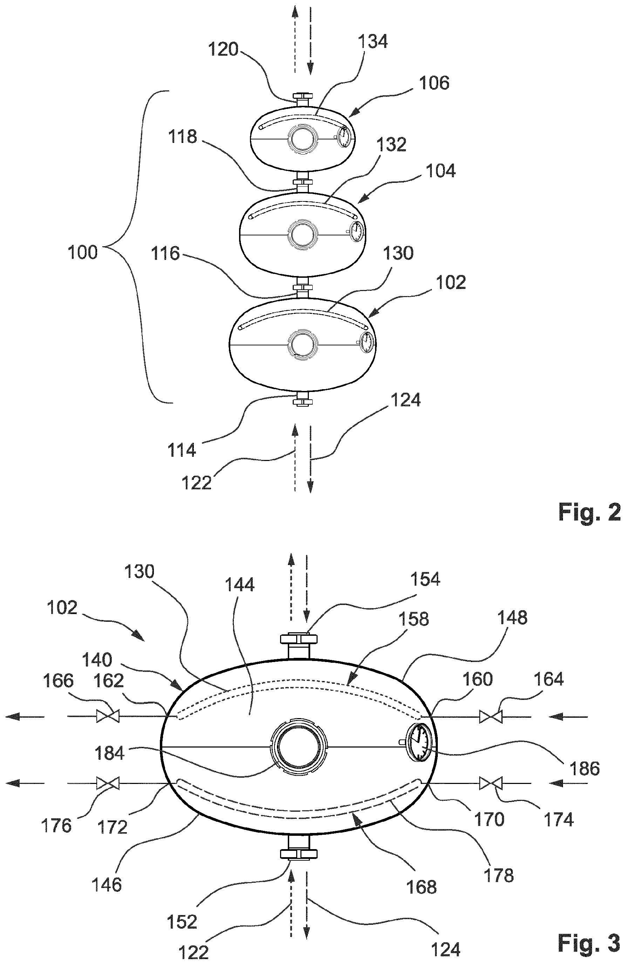

Mit Bezugnahme auf die Figuren 2-6 werden alternative Gestaltungen veranschaulicht, die sich sowohl funktional als auch in optischer Hinsicht von der konventionellen Gestaltung gemäß Fig. 1 abheben.

Fig. 2 veranschaulicht eine insgesamt mit 100 bezeichnete Behälterkaskade. Die Behälterkaskade 100 umfasst in diesem Ausführungsbeispiel drei übereinander angeordnete Behälter 102, 104, 106. Fig. 3 veranschaulicht beispielhaft den Behälter 102 in vergrößerter Darstellung. Die Behälter 102, 104, 106 sind als Ellipsoide gestaltet, insbesondere als Rotationsellipsoide. Vergleiche hierzu das Bezugszeichen 140 in Fig. 3. Das Ellipsoid 140 ist mit seiner kurzen Hauptachse vertikal orientiert. Die Behälter 102, 104, 106 sind übereinander angeordnet und mit ihren (kurzen) Hauptachsen konzentrisch zueinander orientiert.

Die Behälter 102, 104, 106 sind über Rohrstücke 114, 116, 118, 120 miteinander bzw. mit der Umgebung verbunden. Bedingt durch die vertikale Anordnung kann sich eine vertikale Durchströmung mit einem alkoholhaltigen Fluid (Alkoholdampf) ergeben. In den Figuren 2 und 3 veranschaulicht ein Pfeil 122 eine abwärts gerichtete Strömung. Ein Pfeil 124 veranschaulicht eine aufwärtsgerichtete Strömung. Der Pfeil 122 steht beispielhaft für die Strömungsrichtung in einer Verstärkereinheit. Der Pfeil 124 steht beispielsweise für die Strömungsrichtung in einer Kühlereinheit.

Die Behälter 102, 104, 106 sind größenmäßig abgestuft. Der Behälter 102 ist unten angeordnet und größer als der Behälter 104, der oberhalb davon angeordnet ist. Der Behälter 104 ist größer als der Behälter 106, der oberhalb des Behälters 104 angeordnet ist. Die Behälter 102, 104, 106 weisen jeweils Kanäle 130, 132, 134 zur Durchleitung und Bereitstellung eines Prozessfluides auf. Bei dem Prozessfluid handelt es sich beispielsweise um Kühlflüssigkeit, Warmwasser, Heißwasser, Wasserdampf und dergleichen.

Fig. 3 veranschaulicht, dass der Behälter 102 im Ausführungsbeispiel in Form eines Ellipsoids 140 vorliegt, beispielsweise als Rotationsellipsoid, das um seine vertikale Achse rotationssymmetrisch gestaltet ist. Der Behälter wird durch zwei Halbschalen 146, 148 gebildet, die zumindest im Wesentlichen gleichartig gestaltet und symmetrisch zueinander angeordnet und miteinander fest verbunden sind. Wie vorstehend bereits angedeutet, ist es von Vorteil, bestehende Vorrichtungen und Werkzeuge für Schalen von Brennblasen, Helmen oder dergleichen zu verwenden, um die Halbschalen 146, 148 für den Behälter 102 und die weiteren Behälter 104, 106 bereitzustellen.

Im Innenraum 144 des Behälters 102 ist der Kanal 130 angeordnet. Der Kanal 130 bildet eine Thermotasche 158 aus, zumindest einen Teil davon. Zur Ankopplung an den Innenraum 144 für das alkoholhaltige Fluid sind ein unterer Anschluss 152 und ein oberer Anschluss 154 vorgesehen. Der untere Anschluss 152 wird beispielsweise durch das Rohrstück 114 gebildet. Der oberer Anschluss 154 wird beispielsweise durch das Rohrstück 116 gebildet, vergleiche Fig. 2. Im Ausführungsbeispiel gemäß Fig. 3 definieren die Anschlüsse 152, 154 den Verlauf der vertikalen Mittenachse durch das Ellipsoid 140 bzw. den Behälter 102.

Die Thermotasche 158 ist beispielhaft als Kühltasche gestaltet. Zur Bereitstellung und Durchleitung eines Prozessfluides sind Anschlüsse 160, 162 vorgesehen, die beispielsweise als Einlass und Auslass fungieren. Den Anschlüssen 160, 162 sind im Ausführungsbeispiel Ventile 164, 166 zugeordnet. Auf diese Weise kann eine Fluidströmung durch die Thermotasche 158 gesteuert werden.

Die Thermotasche 158 wird beispielhaft durch zwei Schalen gebildet, die miteinander gefügt werden und einen Körper ausbilden, der ähnlich einem Diskus oder einem Frisbee gestaltet ist. Die Thermotasche 158 ist mit anderem Worten ähnlich einem gewölbten Fladenbrot gestaltet. Der in Fig. 3 veranschaulichte Querschnitt der Thermotasche 158 ist beispielhaft etwa bananenförmig gestaltet. Beispielhaft ist die Thermotasche 158 an die jeweilige Behälterwand angepasst und mit definiertem (geringen) Abstand hiervon angeordnet. Auf diese Weise muss das alkoholhaltige Fluid eine definierte Engstelle zwischen der Thermotasche 158 und Behälterwand durchströmen. Beispielhaft ist die Thermotasche 158 demgemäß an die Krümmung des Behälters 102 angepasst und (je nach Strömungsrichtung) konkav oder konvex orientiert.

Neben der Thermotasche 158 weist der Behälter 102 im Innenraum 144 eine weitere Thermotasche 168 auf. Die Thermotasche 168 ist unten im Behälter 102 bei der unteren Halbschale 146 angeordnet. Die Thermotasche 158 ist oben im Behälter 102 bei der oberen Halbschale 148 angeordnet. Die Thermotaschen 158, 168 können grundsätzlich als Kühltasche oder Wärmetasche gestaltet sein. Beispielhaft dient die Thermotasche 158 als Kühltasche. Hingegen kann die Thermotasche 168 als Wärmetasche dienen. Dies ist nicht einschränkend zu verstehen.

Die Thermotasche 158 wird durch einen oder mehrere Kanäle 130 gebildet. Die Thermotasche 168 wird durch einen oder mehrere Kanäle 178 gebildet. Zur Bereitstellung eines Prozessfluides für die Thermotasche 168 sind Anschlüsse 170, 172 vorgesehen, die beispielsweise als Einlass und Auslass fungieren. Den Anschlüssen 170, 172 sind im Ausführungsbeispiel Ventile 174, 176 zugeordnet. Auf diese Weise kann eine Fluidströmung durch die Thermotasche 168 gesteuert werden.

In Fig. 3 ist ferner mit 184 ein Schauglas und mit 186 ein Messinstrument, etwa ein Temperaturfühler, dargestellt. Es besteht die Möglichkeit, in jedem der Behälter 102, 104, 106 ein Schauglas und Messinstrumente bereitzustellen. Grundsätzlich ist es auch vorstellbar, in jedem der Behälter 102, 104, 106 eine oder zwei Thermotaschen anzuordnen. Somit kann vielfältig auf den Brennprozess eingewirkt werden.

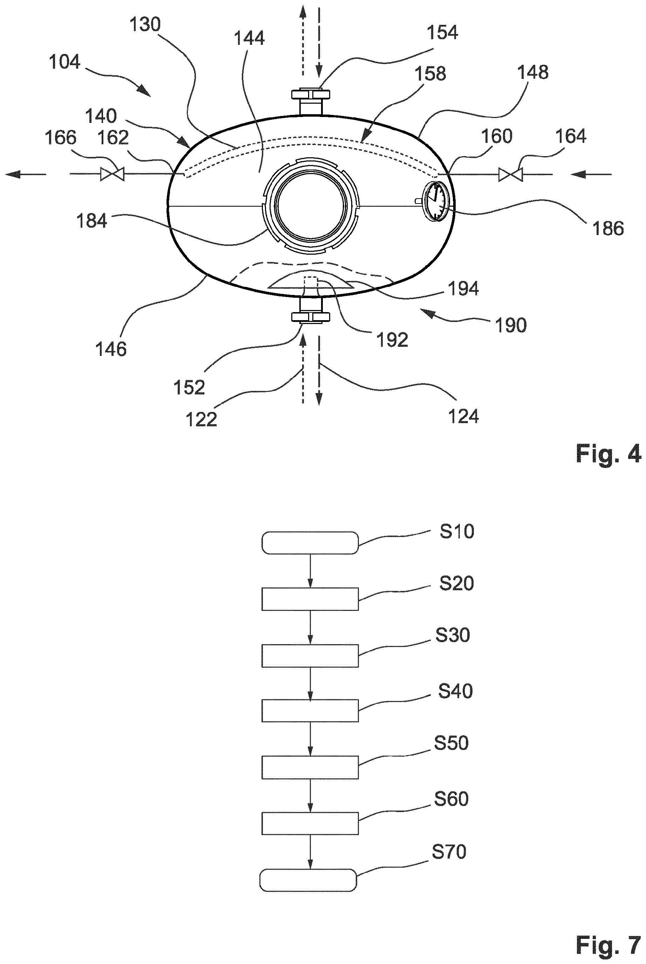

Fig. 4 veranschaulicht auf Basis der in Fig. 3 gezeigten Gestaltung des Behälters 102 eine weitere beispielhafte Ausgestaltung eines Behälters, der hier mit 104 bezeichnet ist. Der Behälter 104 fungiert als Kochboden. Die Gestaltung der Behälter 102 und 104 gemäß den Figuren 3 und 4 kann in der Behälterkaskade 100 zusammengeführt werden, indem entsprechende Behältertypen kombiniert werden. Es sind also Behälterkaskaden 100 mit gemischter Funktionalität vorstellbar. Es sind jedoch auch Behälterkaskaden 100 vorstellbar, bei denen einheitlich ein Behältertyp verbaut ist. Dies muss sich nicht notwendigerweise auf die Größe der Behälter 102, 104, 106 beziehen. Eine Größenabstufung ist weiterhin denkbar.

Die beispielsweise in Fig. 2 gezeigte Behälterkaskade 100 kann folglich eine Mehrzahl von Behältern aufweisen, von denen zumindest einer als Kochboden und zumindest einer als Dephlegmator fungiert. Üblicherweise sitzt ein Dephlegmator oberhalb eines oder mehrerer Kochböden.

Der Behälter 104 gemäß Fig. 4 bildet beispielhaft einen als Glockenboden gestalteten Kochboden 190 aus. Im Bereich des unteren Anschlusses 152 mündet ein Hals oder Stutzen 192 in den Innenraum 144 des Behälters 104. Dem Stutzen 192 ist eine Haube 194 zugeordnet, die vom oberen Ende des Stutzens 192 beabstandet ist. Die Haube 194 kann auch als Glocke bezeichnet werden. Während der Destillation sammelt sich Flüssigkeit im unteren Bereich der Halbschale 146 um den Stutzen 192 herum an. Die Haube 194 erstreckt sich mit ihrem Rand unterhalb eines oberen Endes des Stutzens 192. Folglich ragt die Haube 194 mit dem Rand in die angesammelte Flüssigkeit hinein. Aufsteigendes alkoholhaltiges Fluid (Alkoholdampf) muss folglich durch die Flüssigkeit hindurchströmen. Auf diese Weise wird ein Kochboden 190 geschaffen, der einen Bestandteil einer Verstärkereinheit bilden kann.

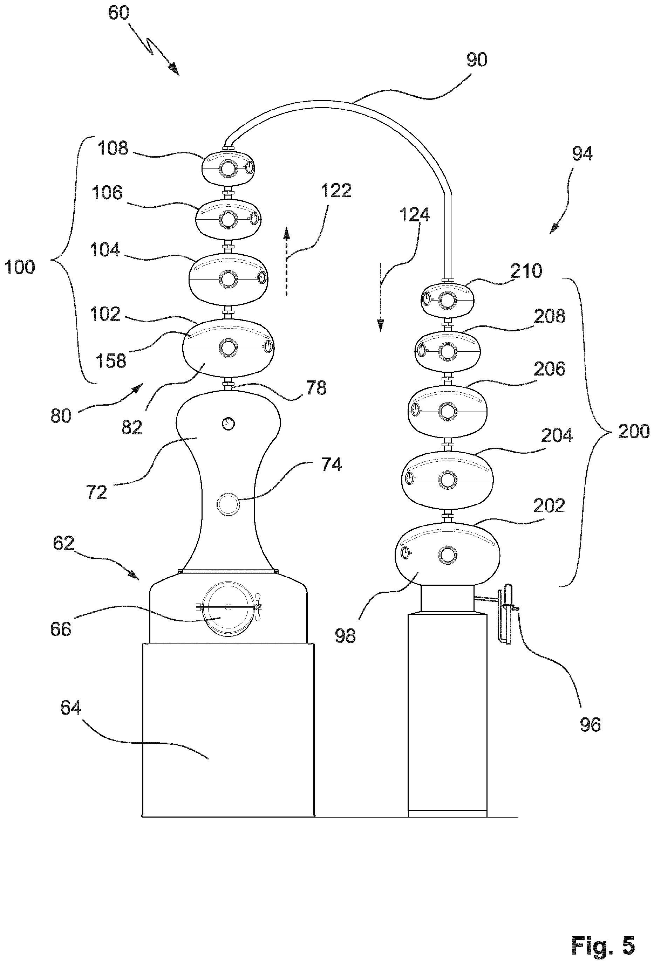

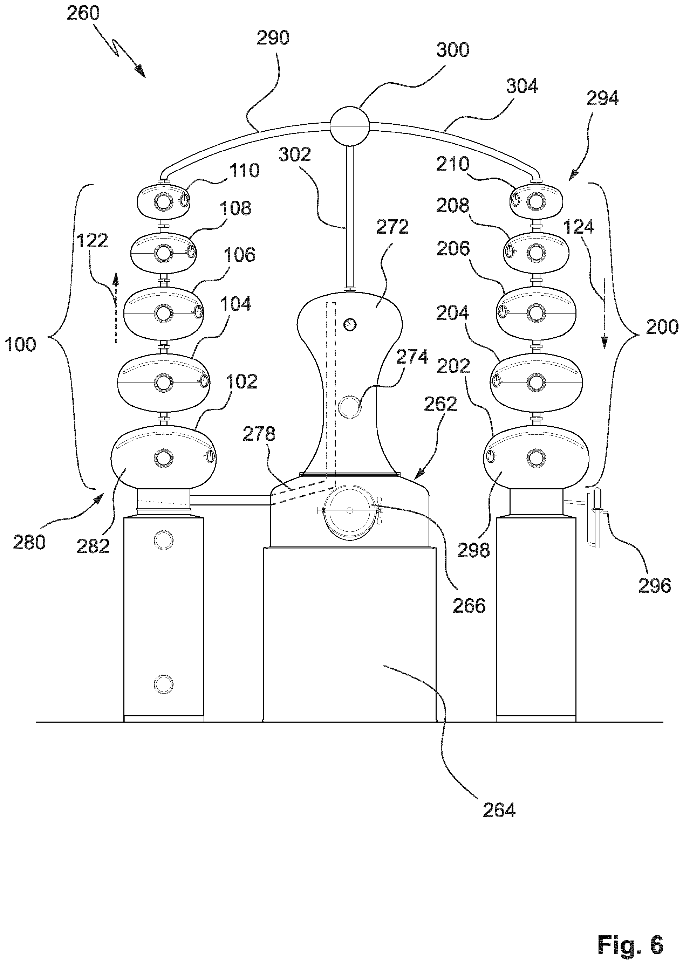

Mit ergänzender Bezugnahme auf die Figuren 5 und 6 werden Gestaltungen von Brenngeräten 60, 260 veranschaulicht, die Kaskaden aus Behältern gemäß den Figuren 2 und 3 nutzen. Wie vorstehend bereits angedeutet, wird zum allgemeinen Aufbau und zur Funktionalität eines Brenngerätes auf Fig. 1 und das dort gezeigte Brenngerät 10 verwiesen.

Fig. 5 veranschaulicht das Brenngerät 60. Das Brenngerät 60 nutzt zwei Behälterkaskaden 100, 200. Die Behälterkaskade 100 umfasst Behälter 102, 104, 106, 108, die in Reihe geschaltet sind. Die Behälterkaskade 200 umfasst Behälter 202, 204, 206, 208, 210, die in Reihe geschaltet sind. Die Behälterkaskade 100 wird zur Verstärkung des Alkoholgehalts genutzt. Die Behälterkaskade 200 wird zur Abkühlung und Kondensation des Destillats genutzt. Die Behälterkaskaden 100, 200 bilden jeweils einen Strang. Es gibt einen Verstärkungsstrang und einen Kühlstrang.

Das Brenngerät 60 weist eine Blase 62 auf, die durch eine Heizeinrichtung 64 beheizbar ist. Die Blase 62 ist über eine Befüllöffnung 66 mit Maische befüllbar. Im Ausführungsbeispiel gemäß Fig. 5 wird die Blase 62 von einem Helm 72 gekrönt. Ferner ist ein Schauglas 74 verbaut, über das ein Blick in die Blase 62 bzw. den Helm 72 möglich ist. Ähnlich wie bei dem Brenngerät 10 gemäß Fig. 1 kann auch ein Rührwerk zum Rühren und Durchmischen der Maische in der Brennblase 62 vorgesehen sein.

Alkoholdampf, der in der Blase 62 erzeugt wird, strömt aus dem Helm 72 über ein Geistrohr 78 in eine Verstärkereinheit 80. Die Verstärkereinheit 80 wird durch die Behälterkaskade 100 gebildet. Die Strömungsrichtung wird durch einen Pfeil 122 veranschaulicht. Das alkoholhaltige Fluid durchströmt die Behälterkaskade 100 von unten nach oben, also beginnend mit dem Behälter 102 und in Richtung auf den Behälter 108. Die Behälter 102, 104, 106, 108 der Kaskade 100 bilden beispielsweise Verstärkerböden 82 der Verstärkereinheit 80.

In den einzelnen, in Reihe geschalteten Behältern 102, 104, 106, 108 erfolgt eine Anreicherung des Alkoholgehalts unter Nutzung verschiedener Siedetemperaturen der beteiligten Fraktionen, etwa von Wasser und Ethanol. Ferner kann auch der Geschmack des zu erzeugenden Destillats beeinflusst werden.

Die einzelnen Behälter 102, 104, 106, 108 der Behälterkaskade 100 sind jeweils mit einer oder zwei Thermotaschen 158 versehen. Die Thermotaschen 158 können einerseits zur Erwärmung des alkoholhaltigen Fluides im jeweiligen Behälter 102, 104, 106, 108 und andererseits zur Abkühlung genutzt werden. Dies erfolgt durch Bereitstellung eines Prozessmediums oder Prozessfluides, das entsprechend kälter oder wärmer als das alkoholhaltige Fluid im Behälter 102, 104, 106, 108 ist.

Im Ausführungsbeispiel gemäß Fig. 5 verlässt der angereicherte Alkoholdampf die Behälterkaskade 100 beim Behälter 108. Der Alkoholdampf wird über eine Verbindungsleitung 90 einer Kühlereinheit 94 zugeführt. Im Ausführungsbeispiel wird die Kühlereinheit 94 durch die Behälterkaskade 200 gebildet. Die Strömungsrichtung wird durch einen Pfeil 124 veranschaulicht. Das alkoholhaltige Fluid durchströmt die Behälterkaskade 200 von oben nach unten, also beginnend mit dem (kleinsten) Behälter 210 und endend bei dem (größten) Behälter 202 der Behälterkaskade 200. Die Behälter 202, 204, 206, 208, 210 der Behälterkaskade 200 bilden beispielsweise Kühlerböden 98 der Kühlereinheit 94. Am Destillatablauf 96 wird kondensiertes Destillat bereitgestellt.

Ähnlich wie die Behälter 102, 104, 106, 108 der Behälterkaskade 100 sind die Behälter 202, 204, 206, 208, 210 der Behälterkaskade 200 jeweils mit einer oder zwei Thermotasche versehen, die bei der Kühlereinheit 94 üblicherweise zur Kühlung verwendet werden. Vergleiche hierzu auch Fig. 3.

Fig. 6 veranschaulicht das Brenngerät 260. Auch das Brenngerät 260 nutzt zwei Behälterkaskaden 100, 200. Die Behälterkaskade 100 umfasst Behälter 102, 104, 106, 108, 110. Die Behälterkaskade 200 umfasst Behälter 202, 204, 206, 208, 210. Die Behälterkaskade 100 wird zur Verstärkung des Alkoholgehalts genutzt. Die Behälterkaskade 200 wird zur Abkühlung und Kondensation des Destillats genutzt. Es gibt wie bei dem Ausführungsbeispiel gemäß Fig. 5 zwei Stränge.

Das Brenngerät 62 weist eine Blase 262 auf, die durch eine Heizeinrichtung 264 beheizbar ist. Die Blase 262 ist über eine Befüllöffnung 266 mit Maische befüllbar. Im Ausführungsbeispiel gemäß Fig. 6 wird die Blase 262 von einem Helm 272 gekrönt. Ferner ist ein Schauglas 274 verbaut, über das ein Blick in die Blase 262 bzw. den Helm 272 möglich ist. Ähnlich wie bei dem Brenngerät 10 gemäß Fig. 1 kann auch ein Rührwerk zum Rühren und Durchmischen der Maische in der Brennblase 262 vorgesehen sein.

Alkoholdampf, der in der Blase 262 erzeugt wird, strömt aus dem Helm 272 über ein Geistrohr 278 in eine Verstärkereinheit 280. Das Geistrohr 278 ist zumindest abschnittsweise im Helm 272 bzw. in der Blase 278 angeordnet. Mit anderen Worten handelt es sich bei dem Geistrohr 278 um ein zumindest teilweise in die Blase 262 integriertes Geistrohr. In einem oberen Bereich des Helms 272 strömt der Alkoholdampf in das Geistrohr 278 hinein. Das Geistrohr 278 mündet im oder bei dem Behälter 102 der Behälterkaskade 100 in die Verstärkereinheit 280.

Die Verstärkereinheit 280 wird durch die Behälterkaskade 100 gebildet. Die Strömungsrichtung wird durch einen Pfeil 122 veranschaulicht. Das alkoholhaltige Fluid durchströmt die Behälterkaskade 100 von unten nach oben, also beginnend mit dem (größten) Behälter 102 und in Richtung auf den (kleinsten) Behälter 110 der Kaskade 100. Die Behälter 102, 104, 106, 108, 110 der Kaskade 100 bilden beispielsweise Verstärkerböden 282 der Verstärkereinheit 280.

In den einzelnen, in Reihe geschalteten Behältern 102, 104, 106, 108, 100 erfolgt eine Anreicherung des Alkoholgehalts unter Nutzung verschiedener Siedetemperaturen der beteiligten Fraktionen, etwa von Wasser und Ethanol. Ferner kann auch der Geschmack des zu erzeugenden Destillats beeinflusst werden.

Im Ausführungsbeispiel gemäß Fig. 6 verlässt der angereicherte Alkoholdampf die Behälterkaskade 100 beim Behälter 110. Der Alkoholdampf wird über eine Verbindungsleitung 290, 304 einer Kühlereinheit 294 zugeführt. In der Verbindungsleitung 290, 304 sitzt ein Ventil 300, das beispielhaft als Wegeventil gestaltet ist. Auf diese Weise wird eine direkte Verbindung zwischen der Verstärkereinheit 280 und der Kühlereinheit 294 geschaffen, wenn das Ventil 300 in der entsprechenden Stellung steht.

Im Ausführungsbeispiel gemäß Fig. 6 ist eine weitere Leitung 302 vorgesehen, die sich zwischen dem Helm 272 und dem Ventil 300 erstreckt. Je nach Stellung des Ventils 300 kann folglich die Verstärkereinheit 280 strömungstechnisch an- oder abgekoppelt werden. Es ist also vorstellbar, dass Ventil 300 anzusteuern, um die Verbindungsleitung 290 zu schließen und stattdessen die Leitung 302 mit der Verbindungsleitung 304 zu verbinden. Auf diese Weise kann der Alkoholdampf aus der Blase 262 bzw. dem Helm 272 direkt und unter Umgehung der Verstärkereinheit 280 in die Kühlereinheit 294 überführt werden.

Umgekehrt kann die Leitung 302 gesperrt werden, so dass der Alkoholdampf den Helm 272 über das Geistrohr 278 verlässt, die Verstärkereinheit 280 durchströmt und über die Verbindungsleitung 290, 304 in die Kühlereinheit 294 einströmt.

Im Ausführungsbeispiel wird die Kühlereinheit 294 durch die Behälterkaskade 200 gebildet. Die Strömungsrichtung wird durch einen Pfeil 124 veranschaulicht. Das alkoholhaltige Fluid durchströmt die Behälterkaskade 200 von oben nach unten, also beginnend mit dem Behälter 210 und endend bei dem Behälter 202. die Behälter 202, 204, 206, 208, 210 der Behälterkaskade 200 bilden beispielsweise Kühlerböden 298 der Kühlereinheit 294. Am Destillatablauf 296 wird kondensiertes Destillat bereitgestellt.

Ähnlich wie die Behälter 102, 104, 106, 108 der Behälterkaskade 100 sind die Behälter 202, 204, 206, 208, 210 der Behälterkaskade 200 jeweils mit einer oder zwei Thermotaschen versehen, die bei der Kühlereinheit 294 üblicherweise zur Kühlung verwendet werden. Vergleiche hierzu auch Fig. 3.

Das Ausführungsbeispiel gemäß Fig. 6 unterscheidet sich von dem Ausführungsbeispiel gemäß Fig. 5in erster Linie dadurch, dass bei dem Brenngerät 60 gemäß Fig. 5 die Behälterkaskade 100 auf dem Helm 72 sitzt. Dagegen ist bei dem Ausführungsbeispiel gemäß Fig. 6 die Blase 262 mit dem Helm 272 (räumlich) zwischen den beiden Behälterkaskaden 100, 200, also zwischen der Verstärkereinheit 280 und der Kühlereinheit 294 angeordnet.

Jeder der Behälter 102, 104, 106, 108, 110 wie auch der Behälter 202, 204, 206, 208, 210 kann analog zur Ausgestaltung des Behälters 102 gemäß Fig. 3 gestaltet sein. Demgemäß können jeweils eine oder zwei Thermotaschen 158, 168, Schaugläser 184, Messinstrumente 186 und Ähnliches vorgesehen sein. Somit kann gezielt auf den Brennprozess Einfluss genommen werden.

Insgesamt zeigen die Figuren 5 und 6 Brenngeräte 60, 260 mit neuartigem Design, bedingt durch die Behälter der jeweiligen Behälterkaskade 100, 200. Im Ausführungsbeispiel sind die Behälter 102, 104, 106, 108, 110 sowie die Behälter 202, 204, 206, 208, 210 jeweils als Ellipsoide gestaltet. Auf diese Weise kann das Brenngerät 60 als Blickfang dienen, etwa in einer Schaubrennerei. Die Bereitstellung der Behälterkaskaden 100, 200 dient jedoch nicht nur optischen oder ästhetischen Zwecken. Stattdessen ergeben sich auch funktionale Vorteile.

Mit Bezugnahme auf Fig. 7 wird anhand eines schematischen Blockschaltbilds ein Verfahren zur Bereitstellung bzw. zur Ertüchtigung eines Brenngerätes veranschaulicht.

Das Verfahren beginnt im Ausführungsbeispiel mit einen Schritt S10.

Das Verfahren umfasst einen Schritt S20, der die Bereitstellung einer Brennblase umfasst. Die Brennblase weist üblicherweise einen Helm auf und ist mittelbar oder unmittelbar mit einer Heizeinrichtung koppelbar. Die Brennblase dient zur Aufnahme von Maische, die über die Heizeinrichtung erhitzt werden kann. Auf diese Weise entstehen alkoholhaltige Dämpfe, die die Brennblase bzw. den Helm über ein Geistrohr verlassen können.

Das Verfahren umfasst einen weiteren Schritt S30, der die Bereitstellung einer Mehrzahl von Behältern, insbesondere einer Mehrzahl von Ellipsoiden, umfasst. Die Behälter können beispielsweise aus Halbschalen gefertigt werden, die Werkzeug und Vorrichtungen nutzen, die ohnehin zur Herstellung von Schalen für Blasen, Helme und Ähnliches verwendet werden. Mit zwei solchen Halbschalen kann ein Ellipsoid gebildet werden.

Die Behälter sind jeweils mit einem oberen und einem unteren Anschluss versehen, welche beispielsweise Rohrstücke o. ä. umfassen. Die Behälter können von einem alkoholhaltigen Fluid durchströmt werden, welches einen der beiden Anschlüsse als Eingang und einen anderen der beiden Anschlüsse als Ausgang nutzt. Die Behälter umfassen ferner zusätzliche Kanäle, die zumindest eine Thermotasche im Behälter bilden. Auf diese Weise lässt sich zumindest eine Prozessfluid durch die Thermotasche und folglich durch den Behälter hindurch leiten. Auf diese Weise kann es beispielhaft zum Wärmeaustausch mit dem alkoholhaltigen Fluid kommen. Dies kann einerseits zu Kühlzwecken und andererseits zur Erwärmung des alkoholhaltigen Fluides dienen.

Das Verfahren umfasst einen weiteren Schritt S40, der die Bildung einer Kaskade durch entsprechende Anordnung mehrerer Behälter umfasst. Beispielhaft können zwei, drei oder mehr Behälter übereinander angeordnet werden, wobei die Behälter hinsichtlich ihrer Größe abgestuft sind. Der größte Behälter wird unten angeordnet. Der kleinste Behälter wird oben angeordnet. Da zwischen verringert sich die Größe der Behälter schrittweise, ausgehend vom unteren hin zum oberen Behälter. Dies gilt zumindest für beispielhafte Ausgestaltungen.

Ein weiterer Schritt S50 umfasst die Verbindung der Kaskade mit einer Brennblase. Wenn die Kaskade zu Verstärkungszwecken genutzt wird, wird die Kaskade über ein Geistrohr mit dem Alkoholdampf gespeist, der in der Blase entsteht. Wenn die Kaskade zu Kühlzwecken genutzt wird, kann die Kaskade direkt über ein Geistrohr (ohne zwischengeschaltete Verstärkereinheit) oder über einen Ausgang einer Verstärkereinheit gespeist werden.

Das Verfahren umfasst einen weiteren Schritt S60, der die Ankopplung oder Verbindung der Kanäle, die die zumindest eine Thermotasche bilden, mit Versorgungsleitungen für zumindest ein Prozessfluid umfasst. Auf diese Weise kann der Behälter mit Warmwasser, Kühlwasser, Wasserdampf oder ähnlichem versorgt werden, um den Alkoholdampf bewusst abzukühlen oder zu erwärmen. Es ist vorstellbar, jeden der Behälter mit einem entsprechenden Prozessfluid zu versorgen, und dies auch pro Behälter separat zu steuern. Auf diese Weise kann in Betrieb jeder Behälter gezielt angesteuert werden. Es ergeben sich weitere Einflussmöglichkeiten auf den Brennvorgang.

Ein weiterer Schritt S70 beschließt das Verfahren, zumindest in beispielhaften Ausführungsformen.

## Patentansprüche

1. Behälterkaskade (100, 200) zur Verwendung in einem Brenngerät (60, 260) für Spirituosen, umfassend zumindest zwei übereinander angeordnete Behälter (102, 104, 106, 108, 110; 202, 204, 206, 208, 210), die zum Medientransfer miteinander verbunden sind, wobei jeder der zumindest zwei Behälter (102, 104, 106, 108, 110; 202, 204, 206, 208, 210) einen unteren Anschluss (152) und einen oberen Anschluss (154) aufweist, wobei die Behälter (102, 104, 106, 108, 110; 202, 204, 206, 208, 210) zum Transfer alkoholhaltigen Fluides zwischen Innenräumen (144) der Behälter (102, 104, 106, 108, 110; 202, 204, 206, 208, 210) über Rohrstücke (114, 116, 118, 120), vorzugsweise statisch tragende Rohrstücke, miteinander verbunden und voneinander beabstandet sind, wobei die zumindest zwei Behälter (102, 104, 106, 108, 110; 202, 204, 206, 208, 210) in den Innenräumen (144) Kanäle (130, 132, 134, 178) zur Durchleitung eines Prozessfluides aufweisen, wobei die zumindest zwei Behälter (102, 104, 106, 108, 110; 202, 204, 206, 208, 210) als Ellipsoid (140), insbesondere als Rotationsellipsoid, gestaltet sind, wobei die zumindest zwei Ellipsoide (140) vorzugsweise mit ihrer kurzen Hauptachse vertikal ausgerichtet und übereinander angeordnet sind, und wobei die Behälterkaskade (100, 200) zumindest einen Strang mit drei oder mehr übereinander angeordneten Behältern (102, 104, 106, 108, 110; 202, 204, 206, 208, 210) und/oder zwei parallel zueinander orientierte Stränge mit jeweils zumindest zwei Behältern (102, 104, 106, 108, 110; 202, 204, 206, 208, 210) umfasst.

2. Behälterkaskade (100, 200) nach Anspruch 1, wobei die Kanäle (130, 132, 134, 178) in den Innenräumen (144) der Behälter (102, 104, 106, 108, 110; 202, 204, 206, 208, 210) als Kühlkanäle gestaltet sind und insbesondere eine Thermotasche (158, 168) ausbilden.

3. Behälterkaskade (100, 200) nach Anspruch 1 oder 2, wobei zumindest ein Behälter (102, 104, 106, 108, 110; 202, 204, 206, 208, 210) Bestandteil einer Verstärkereinheit ist, und wobei der Alkoholgehalt des durchströmenden Fluides durch gezielte Kondensation unter Nutzung eines Kanals als Kühlkanal erhöht wird.

4. Behälterkaskade (100, 200) nach einem der Ansprüche 1-3, wobei die Kanäle (130, 132, 134, 178) in den Innenräumen (144) der Behälter (102, 104, 106, 108, 110; 202, 204, 206, 208, 210) obere Kanäle (130, 132, 134) und untere Kanäle (178) umfassen, und wobei vorzugsweise die oberen Kanäle (130, 132, 134) als Kühlkanäle und die unteren Kanäle (178) als Heißkanäle gestaltet sind.

5. Behälterkaskade (100, 200) nach einem der Ansprüche 1-4, wobei zumindest einer der Behälter (102, 104, 106, 108, 110; 202, 204, 206, 208, 210) als Kochboden (190) ausgebildet ist.

6. Behälterkaskade (100, 200) nach einem der Ansprüche 1-5, wobei zumindest einer der Behälter (102, 104, 106, 108, 110; 202, 204, 206, 208, 210) als Kühlerboden (98, 298) gestaltet ist.

7. Behälterkaskade (100, 200) nach einem der Ansprüche 1-6, wobei die zumindest zwei übereinander angeordneten Behälter (102, 104, 106, 108, 110; 202, 204, 206, 208, 210) von unten nach oben kleiner werden.

8. Behälterkaskade (100, 200) nach einem der Ansprüche 1-7,wobei zumindest einer der Behälter (102, 104, 106, 108, 110; 202, 204, 206, 208, 210) aus zwei Halbschalen (146, 148) besteht, die miteinander stoffschlüssig verbunden sind.

9. Behälterkaskade (100, 200) nach einem der Ansprüche 1-8, wobei zumindest zwei übereinander angeordnete Behälter (102, 104, 106, 108, 110; 202, 204, 206, 208, 210) von unten nach oben durchströmt werden, und wobei es sich insbesondere um Kochböden zur Verstärkung handelt.

10. Behälterkaskade (100, 200) nach einem der Ansprüche 1-9, wobei zumindest zwei übereinander angeordnete Behälter (102, 104, 106, 108, 110; 202, 204, 206, 208, 210) von oben nach unten durchströmt werden, und wobei es sich insbesondere um Kühler handelt.

11. Brenngerät (60, 260) mit einer Brennblase (62, 262), die mit einer Heizeinrichtung (64, 264) gekoppelt ist, und zumindest einer Behälterkaskade (100, 200) nach einem der Ansprüche 1-10, die als Verstärkereinheit (80, 280) oder Kühleinheit (94, 294) dient und beim Brennvorgang von einem alkoholhaltigen Fluid vertikal durchströmt wird.

12. Brenngerät (60, 260) nach Anspruch 11, wobei zwei Behälterkaskaden (100, 200) vorgesehen sind, wobei eine Behälterkaskade (100, 200) vom alkoholhaltigen Fluid entgegen der Schwerkraft und eine andere Behälterkaskade (100, 200) vom alkoholhaltigen Fluid in Schwerkraftrichtung durchströmt wird.

13. Brenngerät (60, 260) nach Anspruch 11 oder 12, wobei eine Behälterkaskade (100, 200) als Verstärkereinheit (80) dient und auf einem Helm (72, 272) der Brennblase (62, 262) benachbart zu dieser angeordnet ist.

14. Brenngerät (60, 260) nach Anspruch 12, wobei die Brennblase (62, 262) zwischen einer ersten Behälterkaskade (100), die als Verstärkereinheit (280) dient, und einer zweiten Behälterkaskade (200), die als Kühlereinheit (294) dient, angeordnet ist, wobei die Verstärkereinheit (280) vorzugsweise an ihrem unteren Behälter (102, 104, 106, 108, 110; 202, 204, 206, 208, 210) über ein Geistrohr (278) gespeist wird, das zumindest teilweise durch die Brennblase (62, 262) verläuft, und wobei zwischen der Verstärkereinheit (280) und der Kühlereinheit (294) eine Verbindungsleitung (290, 304) angeordnet ist, die ein Wegeventil (300) aufweist, über das bedarfsweise die Brennblase (62, 262) unter Umgehung der Verstärkereinheit (280) mit der Kühlereinheit (294) koppelbar ist.

15. Verfahren zur Bereitstellung eines Brenngerätes (60, 260), umfassend die folgenden Schritte:
- Bereitstellung einer Brennblase (62, 262), die mit einer Heizeinrichtung (64, 264) gekoppelt ist,
- Bereitstellung einer Mehrzahl von Behältern (102, 104, 106, 108, 110; 202, 204, 206, 208, 210), die zu einer Behälterkaskade (100, 200) nach einem der Ansprüche 1-10 kombiniert werden,
- Anordnen der Behälter (102, 104, 106, 108, 110; 202, 204, 206, 208, 210) in zumindest einem Strang, übereinander und vorzugsweise nach Größe geordnet, zur Ausbildung der Behälterkaskade (100, 200),
- Verbindung der Behälterkaskade (100, 200) mit einem Geistrohr (278) der Brennblase (62, 262), und
- Verbindung von Kanälen (130, 132, 134, 178) in den Innenräumen (144) der Behälter (102, 104, 106, 108, 110; 202, 204, 206, 208, 210) mit Anschlüssen (160, 162, 170, 172) zur Durchleitung eines Prozessfluides.

## Claims

1. A container cascade (100, 200) for use in a distilling apparatus (60, 260) for spirits, comprising at least two containers (102, 104, 106, 108, 110; 202, 204, 206, 208, 210) that are arranged one above the other and connected together for media transfer, wherein each of the at least two containers (102, 104, 106, 108, 110; 202, 204, 206, 208, 210) comprises a lower port (152) and an upper port (154), wherein the containers (102, 104, 106, 108, 110; 202, 204, 206, 208, 210) are connected to one another and spaced apart from one another via pipe sections (114, 116, 118, 120), preferably statically supporting pipe sections, for transferring alcohol-containing fluid between interior spaces (144) of the containers (102, 104, 106, 108, 110; 202, 204, 206, 208, 210), wherein the at least two containers (102, 104, 106, 108, 110; 202, 204, 206, 208, 210) comprise channels (130, 132, 134, 178) in the interior spaces (144) for passing a process fluid, wherein the at least two containers (102, 104, 106, 108, 110; 202, 204, 206, 208, 210) are arranged as an ellipsoid (140), in particular as an rotational ellipsoid, wherein the at least two ellipsoids (140) are preferably vertically aligned with their short main axis and arranged one above the other, and wherein the container cascade (100, 200) comprises at least one string with three or more containers (102, 104, 106, 108, 110; 202, 204, 206, 208, 210) that are arranged one above the other and/or two strings that are oriented parallel to each other, with each string comprising at least two containers (102, 104, 106, 108, 110; 202, 204, 206, 208, 210).

2. The container cascade (100, 200) of claim 1, wherein the channels (130, 132, 134, 178) in the interior spaces (144) of the containers (102, 104, 106, 108, 110; 202, 204, 206, 208, 210) are arranged as cooling channels and in particular form a thermal pocket (158, 168).

3. The container cascade (100, 200) of claim 1 or 2, wherein at least one container (102, 104, 106, 108, 110; 202, 204, 206, 208, 210) is part of an amplifier unit, and wherein the alcohol content of the fluid flowing through is increased by selective condensation using a channel as a cooling channel.

4. The container cascade (100, 200) of any one of claims 1-3, wherein the channels (130, 132, 134, 178) in the interior spaces (144) of the containers (102, 104, 106, 108, 110; 202, 204, 206, 208, 210) comprise upper channels (130, 132, 134) and lower channels (178), and wherein preferably the upper channels (130, 132, 134) are configured as cooling channels and the lower channels (178) are configured as hot channels.

5. The container cascade (100, 200) of any one of claims 1-4, wherein at least one of the containers (102, 104, 106, 108, 110; 202, 204, 206, 208, 210) is formed as a cooking tray (190).

6. The container cascade (100, 200) of any one of claims 1-5, wherein at least one of the containers (102, 104, 106, 108, 110; 202, 204, 206, 208, 210) is configured as a cooler tray (98, 298).

7. The container cascade (100, 200) of any one of claims 1-6, wherein the at least two containers (102, 104, 106, 108, 110; 202, 204, 206, 208, 210) that are arranged one above the other are decreasing in size from bottom to top.

8. The container cascade (100, 200) of any one of claims 1-7, wherein at least one of the containers (102, 104, 106, 108, 110; 202, 204, 206, 208, 210) consists of two half-shells (146, 148), which are joined to each other in a materially bonded manner.

9. The container cascade (100, 200) of any one of claims 1-8, wherein at least two containers (102, 104, 106, 108, 110; 202, 204, 206, 208, 210) that are arranged one above the other are flowed through from bottom to top, and in particular wherein they are cooking trays for amplification.

10. The container cascade (100, 200) of any one of claims 1-9, wherein at least two containers (102, 104, 106, 108, 110; 202, 204, 206, 208, 210) that are arranged one above the other are flowed through from top to bottom, and in particular wherein they are coolers.

11. A distilling apparatus (60, 260) comprising a still (62, 262), which is coupled to a heating device (64, 264), and at least one container cascade (100, 200) as claimed in any one of claims 1-10, which serves as an amplifier unit (80, 280) or a cooling unit (94, 294) and through which an alcohol-containing fluid flows vertically during the distilling process.

12. The distilling apparatus (60, 260) of claim 11, wherein two container cascades (100, 200) are provided, one container cascade (100, 200) having the alcohol-containing fluid flowing therethrough against gravity and another container cascade (100, 200) having the alcohol-containing fluid flowing therethrough in the direction of gravity.

13. The distilling apparatus (60, 260) of claim 11 or 12, wherein a container cascade (100, 200) serves as an amplifier unit (80) and is arranged on a helmet (72, 272) of the still (62, 262) adjacent thereto.

14. The distilling apparatus (60, 260) of claim 12, wherein the still (62, 262) is arranged between a first container cascade (100) serving as an amplifier unit (280) and a second container cascade (200) serving as a cooling unit (294), wherein the amplifier unit (280) is preferably fed at its lower container (102, 104, 106, 108, 110; 202, 204, 206, 208, 210) via a spirit pipe (278) which extends at least partially through the still (62, 262), and wherein a connecting line (290, 304) is arranged between the amplifier unit (280) and the cooling unit (294), the connecting line (290, 304) comprising a directional control valve (300), via which the still (62, 262) can be coupled to the cooling unit (294) while bypassing the amplifier unit (280), if required.

15. A method of providing a distilling apparatus (60, 260), comprising the steps of:
- providing a still (62, 262) that is coupled to a heating device (64, 264),
- providing a plurality of containers (102, 104, 106, 108, 110; 202, 204, 206, 208, 210) that are combined to form a container cascade (100, 200) as claimed in any one of claims 1-10,
- arranging the containers (102, 104, 106, 108, 110; 202, 204, 206, 208, 210) in at least one string, one above the other and preferably ordered by size, to form the container cascade (100, 200),
- connecting the container cascade (100, 200) to a spirit pipe (278) of the still (62, 262), and
- connecting channels (130, 132, 134, 178) in the interior spaces (144) of the containers (102, 104, 106, 108, 110; 202, 204, 206, 208, 210) to ports (160, 162, 170, 172) for passing of a process fluid.

## Revendications

1. Cascade de récipients (100, 200) pour utilisation dans un appareil de distillation (60, 260) pour spiritueux, comprenant au moins deux récipients agencés l'un au-dessus de l'autre (102, 104, 106, 108, 110 ; 202, 204, 206, 208, 210), reliés entre eux pour le transfert de milieu, chacun des au moins deux récipients (102, 104, 106, 108, 110 ; 202, 204, 206, 208, 210) présentant un raccord inférieur (152) et un raccord supérieur (154), les récipients (102, 104, 106, 108, 110 ; 202, 204, 206, 208, 210), pour le transfert de fluide contenant de l'alcool entre des espaces intérieurs (144) des récipients (102, 104, 106, 108, 110 ; 202, 204, 206, 208, 210), étant reliés entre eux et espacés les uns des autres par l'intermédiaire de pièces tubulaires (114, 116, 118, 120), de préférence de pièces tubulaires statiquement portantes, les au moins deux récipients (102, 104, 106, 108, 110 ; 202, 204, 206, 208, 210) présentant dans les espaces intérieurs (144) des canaux (130, 132, 134, 178) pour le passage d'un fluide de processus, les au moins deux récipients (102, 104, 106, 108, 110 ; 202, 204, 206, 208, 210) étant conçus sous forme d'ellipsoïde (140), notamment sous forme d'ellipsoïde de révolution, les au moins deux ellipsoïdes (140) étant de préférence orientés verticalement avec leur axe principal court et agencés l'un au-dessus de l'autre, et la cascade de récipients (100, 200) comprenant au moins une ligne avec trois récipients ou plus agencés les uns au-dessus des autres (102, 104, 106, 108, 110 ; 202, 204, 206, 208, 210) et/ou deux lignes orientées parallèlement l'une à l'autre, chacune avec au moins deux récipients (102, 104, 106, 108, 110 ; 202, 204, 206, 208, 210).

2. Cascade de récipients (100, 200) selon la revendication 1, dans laquelle les canaux (130, 132, 134, 178) dans les espaces intérieurs (144) des récipients (102, 104, 106, 108, 110 ; 202, 204, 206, 208, 210) sont conçus sous forme de canaux froids et réalisent notamment une poche thermique (158, 168).

3. Cascade de récipients (100, 200) selon la revendication 1 ou 2, dans laquelle au moins un récipient (102, 104, 106, 108, 110 ; 202, 204, 206, 208, 210) est un constituant d'une unité d'enrichissement, et dans laquelle la teneur en alcool du fluide qui la traverse est augmentée par condensation ciblée en utilisant un canal en tant que canal froid.

4. Cascade de récipients (100, 200) selon l'une quelconque des revendications 1 à 3, dans laquelle les canaux (130, 132, 134, 178) dans les espaces intérieurs (144) des récipients (102, 104, 106, 108, 110 ; 202, 204, 206, 208, 210) comprennent des canaux supérieurs (130, 132, 134) et des canaux inférieurs (178), et dans laquelle, de préférence, les canaux supérieurs (130, 132, 134) sont conçus sous forme de canaux froids et les canaux inférieurs (178) sous forme de canaux chauds.

5. Cascade de récipients (100, 200) selon l'une quelconque des revendications 1 à 4, dans laquelle au moins l'un des récipients (102, 104, 106, 108, 110 ; 202, 204, 206, 208, 210) est réalisé sous forme de plateau chauffant (190).

6. Cascade de récipients (100, 200) selon l'une quelconque des revendications 1 à 5, dans laquelle au moins l'un des récipients (102, 104, 106, 108, 110 ; 202, 204, 206, 208, 210) est conçu sous forme de plateau refroidisseur (98, 298).

7. Cascade de récipients (100, 200) selon l'une quelconque des revendications 1 à 6, dans laquelle les au moins deux récipients agencés l'un au-dessus de l'autre (102, 104, 106, 108, 110 ; 202, 204, 206, 208, 210) deviennent plus petits de bas en haut.

8. Cascade de récipients (100, 200) selon l'une quelconque des revendications 1 à 7, dans laquelle au moins l'un des récipients (102, 104, 106, 108, 110 ; 202, 204, 206, 208, 210) est constitué de deux demi-coques (146, 148) qui sont reliées entre elles par liaison de matière.

9. Cascade de récipients (100, 200) selon l'une quelconque des revendications 1 à 8, dans laquelle au moins deux récipients agencés l'un au-dessus de l'autre (102, 104, 106, 108, 110 ; 202, 204, 206, 208, 210) sont traversés de bas en haut, et dans laquelle il s'agit notamment de plateaux chauffants pour l'enrichissement.

10. Cascade de récipients (100, 200) selon l'une quelconque des revendications 1 à 9, dans laquelle au moins deux récipients agencés l'un au-dessus de l'autre (102, 104, 106, 108, 110 ; 202, 204, 206, 208, 210) sont traversés de haut en bas, et dans laquelle il s'agit notamment de refroidisseurs.

11. Appareil de distillation (60, 260) avec un alambic (62, 262) couplé à un dispositif de chauffage (64, 264), et au moins une cascade de récipients (100, 200) selon l'une quelconque des revendications 1 à 10, qui sert d'unité d'enrichissement (80, 280) ou d'unité de refroidissement (94, 294) et qui est traversée verticalement par un fluide contenant de l'alcool lors de l'opération de distillation.

12. Appareil de distillation (60, 260) selon la revendication 11, dans lequel deux cascades de récipients (100, 200) sont prévues, une cascade de récipients (100, 200) étant traversée par le fluide contenant de l'alcool à l'encontre de la force de gravité et une autre cascade de récipients (100, 200) étant traversée par le fluide contenant de l'alcool dans la direction de la force de gravité.

13. Appareil de distillation (60, 260) selon la revendication 11 ou 12, dans lequel une cascade de récipients (100, 200) sert d'unité d'enrichissement (80) et est agencée sur un casque (72, 272) de l'alambic (62, 262) au voisinage de celui-ci.

14. Appareil de distillation (60, 260) selon la revendication 12, dans lequel l'alambic (62, 262) est agencé entre une première cascade de récipients (100) servant d'unité d'enrichissement (280) et une deuxième cascade de récipients (200) servant d'unité de refroidissement (294), dans lequel l'unité d'enrichissement (280) est de préférence alimentée au niveau de son récipient inférieur (102, 104, 106, 108, 110 ; 202, 204, 206, 208, 210) par l'intermédiaire d'un tube à esprit (278) qui traverse au moins partiellement l'alambic (62, 262), et dans lequel une conduite de liaison (290, 304) est agencée entre l'unité d'enrichissement (280) et l'unité de refroidissement (294), laquelle conduite présente un distributeur à plusieurs voies (300) par l'intermédiaire duquel, au besoin, l'alambic (62, 262) peut être couplé à l'unité de refroidissement (294) en contournant l'unité d'enrichissement (280).

15. Procédé pour fournir un appareil de distillation (60, 260), comprenant les étapes suivantes :
- la fourniture d'un alambic (62, 262) couplé à un dispositif de chauffage (64, 264),
- la fourniture d'une pluralité de récipients (102, 104, 106, 108, 110 ; 202, 204, 206, 208, 210) qui sont combinés en une cascade de récipients (100, 200) selon l'une quelconque des revendications 1 à 10,
- l'agencement des récipients (102, 104, 106, 108, 110 ; 202, 204, 206, 208, 210) en au moins une ligne, les uns au-dessus des autres et de préférence par ordre de taille, pour réaliser la cascade de récipients (100, 200),
- la liaison de la cascade de récipients (100, 200) à un tube à esprit (278) de l'alambic (62, 262), et
des récipients (102, 104, 106, 108, 110 ; 202, 204, 206, 208, 210) à des raccords (160, 162, 170, 172) pour le passage d'un fluide de processus.
